# EUROPEAN PATENT APPLICATION

(11) **EP 4 557 698 A1**
(43) Date of publication of application: **21.05.2025**
(21) Application number: 24210008.9
(22) Date of filing: 31.10.2024
(51) Int. Cl.: H04L 61/5014

(54) **METHOD, DEVICE, APPARATUS FOR NETWORK CONNECTION, AND STORAGE MEDIUM**

(30) Priority: 20.11.2023 CN 202311549155
(71) Applicant: Beijing Pantum Information Technology Co., Ltd., Beijing (CN)
(72) Inventor: YAO, Zhuo, Beijing (CN); JIANG, Yongjiu, Beijing (CN)
(74) Representative: Sun, Yiming

(57) **Abstract**

A network connection method includes: obtaining network configuration information including at least one information item that includes a name or a password of a target router; establishing a connection with a terminal; receiving network segment filtering information sent by the terminal, the network segment filtering information being obtained after the terminal establishes a connection with a target router in response to the terminal selecting any one of the at least two routers included in the local area network as the target router; establishing a connection with the target router according to the network configuration information; and sending an address request instruction to the at least two routers included in the local area network, and obtaining an Internet Protocol (IP) address in a network segment same as the terminal as a target IP address based on the network segment filtering information, to communicate with the terminal through the target IP address.

## Description

### TECHNICAL FIELD

The present disclosure generally relates to the field of communication technology and, more particularly, relates to a method, device and apparatus for network connection, and a storage medium.

### BACKGROUND

Router cascading is to connect a plurality of routers in series to provide network services. Router cascading can enhance wireless signals, expand network coverage, increase network speed, and improve Internet experience, and is increasingly widely used.

At present, when a plurality of routers are cascaded and the Dynamic Host Configuration Protocol (DHCP) service is enabled on the plurality of cascaded routers, when an image forming device communicates with a terminal through the plurality of routers, there is a situation where the Internet Protocol (IP) address assigned to the image forming device and the IP assigned to the terminal do not belong to the same network segment, which leads to the problem that the image forming device and the terminal cannot communicate normally.

### SUMMARY

So, The present application provides a network connection method, device, equipment and storage medium to solve the problem that an image forming device and a terminal cannot communicate normally when routers are in a cascaded manner and multiple cascaded routers have enabled the DHCP service.

The first aspect of the present disclosure provides a network connection method. The method is applied to an image forming device for connecting the image forming device to a local area network including at least two routers that enable dynamic configuration services. The method includes: obtaining network configuration information, where the network configuration information includes at least one information item including a name or a password of a target router; establishing a connection with a terminal; receiving network segment filtering information sent by the terminal, where the network segment filtering information is obtained after the terminal establishes a connection with a target router in response to the terminal selecting any one of the at least two routers included in the local area network as the target router; establishing a connection with the target router according to the network configuration information; and sending an address request instruction to the at least two routers included in the local area network, and obtaining an Internet Protocol (IP) address in a network segment same as the terminal as a target IP address based on the network segment filtering information, to communicate with the terminal through the target IP address.

Optionally, the network segment filtering information includes at least one of the IP address of the built-in dynamic configuration server of the target router, the IP address of the target router, and the IP address of the terminal. The IP address of the terminal is allocated to the terminal by the target router through the built-in dynamic configuration server.

Optionally, the address request instruction includes a Dynamic Host Configuration Protocol (DHCP) discovery packet. Sending the address request instruction to at least two routers included in the local area network and obtaining the IP address in the same network segment as the terminal as the target IP address based on the network segment filtering information includes: broadcasting the DHCP discovery packet; receiving DHCP offer packets sent by the built-in DHCP servers of each router in the local area network; the DHCP offer packet contains at least one of the IP address of the router, the IP address of the built-in DHCP server of the router, and the IP address allocated to the image forming device; based on the network segment filtering information, filtering from the DHCP offer packets to obtain the target IP address allocated to the image forming device.

Optionally, filtering from the DHCP offer packets to obtain the target IP address allocated to the image forming device based on the network segment filtering information includes: if the IP address of the built-in DHCP server of the router contained in the DHCP offer packet is the same as the IP address of the built-in DHCP server of the target router, then determining the IP address allocated to the image forming device contained in the DHCP offer packet as the target IP address; or, if the IP address of the router contained in the DHCP offer packet is the same as the IP address of the target router, then determining the IP address allocated to the image forming device contained in the DHCP offer packet as the target IP address; or, if the IP address allocated to the image forming device contained in the DHCP offer packet is in the same network segment as the IP address of the terminal, then determining the IP address allocated to the image forming device contained in the DHCP offer packet as the target IP address.

The second aspect of the present disclosure provides another network connection method. The network connection method is applied to a terminal which is in a local area network same as an image forming device. The local area network includes at least two routers with enabled dynamic configuration services. The method includes: selecting any one of the at least two routers included in the local area network as a target router in response to the terminal, and establishing a connection with the target router; obtaining network segment filtering information through the connection with the target router; establishing a connection with the image forming device; and sending the network segment filtering information to the image forming device through the connection established with the image forming device. The image forming device is used to establish a connection with the target router according to the obtained network configuration information, and send an address request instruction to the at least two routers included in the local area network, and obtain an IP address in a network segment same as the terminal as a target IP address based on the network segment filtering information, to communicate with the terminal through the target IP address. The network configuration information includes at least one information item including a name or a password of the target router.

Optionally, before establishing a connection with the image forming device, the network connection method further includes: disconnecting the connection with the target router.

Optionally, the network segment filtering information includes at least one of the IP address of the built-in dynamic configuration server of the target router, the IP address of the target router, and the IP address of the terminal. The IP address of the terminal is allocated to the terminal by the target router through the built-in dynamic configuration server.

Optionally, before responding to the terminal's selection of any router among at least two routers included in the local area network as the target router, the network connection method further includes: in response to a configuration operation on the information of the target router, obtaining network configuration information.

The third aspect of the present disclosure provides a network connection device. The network connection device is applied to an image forming device to connect the image forming device to a local area network including at least two routers that enable dynamic configuration services. The network connection device includes: an acquisition module, configured to obtaining network configuration information, where the network configuration information includes at least one information item including a name or a password of a target router; a first connection module, configured to establish a connection with a terminal; a receiving module, configured to receive network segment filtering information sent by the terminal, where the network segment filtering information is obtained after the terminal establishes a connection with a target router in response to the terminal selecting any one of the at least two routers included in the local area network as the target router; a second connection module, configured to establish a connection with the target router according to the network configuration information; and a process module, configured to: send an address request instruction to the at least two routers included in the local area network, and obtain an IP address in a network segment same as the terminal as a target IP address based on the network segment filtering information, to communicate with the terminal through the target IP address.

Optionally, the network segment filtering information includes at least one of the IP address of the built-in dynamic configuration server of the target router, the IP address of the target router, and the IP address of the terminal. The IP address of the terminal is allocated to the terminal by the target router through the built-in dynamic configuration server.

Optionally, the address request instruction includes a Dynamic Host Configuration Protocol (DHCP) discovery packet. The processing module is specifically configured to: broadcast a DHCP discovery packet; receive DHCP offer packets sent by the built-in DHCP servers of each router in the local area network; the DHCP offer packet contains at least one of the IP address of the router, the IP address of the built-in DHCP server of the router, and the IP address allocated to the image forming device; based on the network segment filtering information, filter from the DHCP offer packets to obtain the target IP address allocated to the image forming device.

Optionally, when the processing module is used to filter from the DHCP offer packets to obtain the target IP address allocated to the image forming device based on the network segment filtering information, it is specifically configured to: if the IP address of the built-in DHCP server of the router contained in the DHCP offer packet is the same as the IP address of the built-in DHCP server of the target router, then determine the IP address allocated to the image forming device contained in the DHCP offer packet as the target IP address; or, if the IP address of the router contained in the DHCP offer packet is the same as the IP address of the target router, then determine the IP address allocated to the image forming device contained in the DHCP offer packet as the target IP address; or, if the IP address allocated to the image forming device contained in the DHCP offer packet is in the same network segment as the IP address of the terminal, then determine the IP address allocated to the image forming device contained in the DHCP offer packet as the target IP address.

The fourth aspect of the present disclosure provides another network connection device. The network connection device is applied to a terminal which is in a local area network same as an image forming device. The local area network includes at least two routers with enabled dynamic configuration services. The device includes: a first connection module, configured to select any one of the at least two routers included in the local area network as a target router in response to the terminal and establish a connection with the target router; an acquisition module, configured to obtain network segment filtering information through the connection with the target router; a second connection module, configured to establish a connection with the image forming device; and a transmission module, configured to send the network segment filtering information to the image forming device through the connection established with the image forming device. The image forming device is used to establish a connection with the target router according to the obtained network configuration information, and send an address request instruction to the at least two routers included in the local area network, and obtain an IP address in a network segment same as the terminal as a target IP address based on the network segment filtering information, to communicate with the terminal through the target IP address. The network configuration information includes at least one information item including a name or a password of the target router.

Optionally, before establishing a connection with the image forming device, the second connection module is further configured to: disconnect the connection with the target router.

Optionally, the network segment filtering information includes at least one of the IP address of the built-in dynamic configuration server of the target router, the IP address of the target router, and the IP address of the terminal. The IP address of the terminal is allocated to the terminal by the target router through the built-in dynamic configuration server.

Optionally, before responding to the terminal's selection of any router among at least two routers included in the local area network as the target router, the acquisition module is further configured to: in response to a configuration operation on the information of the target router, obtain network configuration information.

The fifth aspect of the present disclosure provides a network connection system. The system includes a terminal and an image forming device. The terminal and the image forming device are in a local area network. The local area network includes at least two routers with enabled dynamic configuration services. The terminal is configured to: select any one of the at least two routers included in the local area network as a target router and establish a connection with the target router; obtain network segment filtering information through the connection with the target router; establish a connection with the image forming device; and send the network segment filtering information to the image forming device through the connection established with the image forming device. The image forming device is configured to: receive network configuration information including at least one information item including a name or a password of the target router; establish a connection with the target router according to the obtained network configuration information; and send an address request instruction to the at least two routers included in the local area network, and obtain an IP address in a network segment same as the terminal as a target IP address based on the network segment filtering information, to communicate with the terminal through the target IP address.

The sixth aspect of the present application provides an electronic device, including: a processor, and a memory in communication connection with the processor; the memory stores computer execution instructions; the processor executes the computer execution instructions stored in the memory to implement the network connection method as described in the first aspect or the second aspect of the present application.

The Seventh aspect of the present application provides a computer-readable storage medium. The computer-readable storage medium stores computer program instructions. When the computer program instructions are executed, the network connection method as described in the first aspect or the second aspect of the present application is implemented.

The eighth aspect of the present application provides a computer program product, including a computer program. When the computer program is executed, the network connection method as described in the first aspect or the second aspect of the present application is implemented.

The network connection method, device, equipment and storage medium provided by the present application. The terminal and the image forming device are in a local area network. The local area network includes at least two routers, and the at least two routers enable dynamic configuration services. Through the terminal responding to the terminal's selection of any router among at least two routers included in the local area network as the target router, and establishing a connection with the target router. Through the connection with the target router, obtain network segment filtering information. The terminal establishes a connection with the image forming device and sends the network segment filtering information to the image forming device through the established connection with the image forming device. The image forming device establishes a connection with the target router according to the obtained network configuration information. The image forming device sends an address request instruction to at least two routers included in the local area network. Based on the network segment filtering information, obtain the IP address in the same network segment as the terminal as the target IP address to communicate with the terminal through the target IP address. In the present application, in a network environment where at least two routers included in the local area network all enable dynamic configuration services, the image forming device obtains the IP address in the same network segment as the terminal as the target IP address among the IP addresses allocated to the image forming device by the dynamic configuration services corresponding to each router in the local area network according to the received network segment filtering information sent by the terminal, and communicates with the terminal through the target IP address. Since the target IP address of the image forming device is in the same network segment as the IP address of the terminal, it can avoid the situation where the image forming device and the terminal cannot communicate normally. Without the user having to additionally set up other routers, the normal communication between the image forming device and the terminal can be ensured, thereby effectively improving the user's experience of using the image forming device.

### BRIEF DESCRIPTION OF THE DRAWINGS

In order to better convey embodiments of the present disclosure or the technical solutions, a brief introduction will be described below to the drawings that need to be used in the description of embodiments or technical solutions. Obviously, the drawings in the following description are some embodiments of the present disclosure. For those persons of ordinary skill in the art, other drawings can be obtained based on these drawings without 20 exerting any creative effort.
FIG. 1 illustrates an application scenario according to various disclosed embodiments of the present disclosure.
FIG. 2 illustrates a schematic diagram of signaling interaction of an exemplary network connection method according to various disclosed embodiments of the present disclosure.
FIG. 3 illustrates a flow chart of an exemplary network connection method according to various disclosed embodiments of the present disclosure.
FIG. 4 illustrates a schematic diagram of signaling interaction of another exemplary network connection method according to various disclosed embodiments of the present disclosure.
FIG. 5 illustrates an exemplary network connection device according to various disclosed embodiments of the present disclosure.
FIG. 6 illustrates another exemplary network connection device according to various disclosed embodiments of the present disclosure.
FIG. 7 illustrates an exemplary network connection system according to various disclosed embodiments of the present disclosure.
FIG. 8 illustrates an exemplary electronic device according to various disclosed embodiments of the present disclosure.

### DETAILED DESCRIPTION

To better describe the purpose, technical solutions, and advantages of embodiments of the present disclosure, specific technical solutions of embodiments of the present disclosure will be further described in detail in conjunction with the drawings in embodiments of the present disclosure. The following examples are used to illustrate the 20 present disclosure but are not intended to limit the scope of the present disclosure. Based on embodiments of the present disclosure, all other embodiments obtained by those persons of ordinary skill in the art without creative efforts fall within the scope of protection of the present disclosure.

It should be noted that the user information (including but not limited to user device information, user personal information, etc.) and data (including but not limited to data for analysis, stored data, displayed data, etc.) involved in the present disclosure are all information and data authorized by the user or fully authorized by all parties, and the collection, use and processing of relevant data must comply with the relevant laws, regulations and standards of relevant countries and regions, and provide corresponding operation portals for users to choose to authorize or refuse.

Some technical terms involved in the present disclosure will be explained first.

Internet Protocol address (IP address) is a unified address format provided by the IP protocol, which assigns a logical address to each network and each host on the Internet to shield the difference in physical addresses.

Dynamic Host Configuration Protocol (DHCP) service allows workstations to connect to the network and automatically obtain an IP address. A server with the DHCP service can set static IP addresses, subnet masks, default gateways, etc. for each network client.

When a plurality of routers are cascaded and the plurality of cascaded routers have all enabled the dynamic configuration service, when an image forming device (such as a printer) communicates with a terminal (such as a mobile phone) through the plurality of routers, the image forming device and the terminal often fail to communicate normally. Taking the dynamic configuration service as the DHCP service as an example, when the image forming device is configured to connect to the local area network, since at least two routers in the local area network have enabled the DHCP service, all routers in the same local area network that have enabled the DHCP service can assign an IP address to a device that join the local area network, and the device that join the local area network uses the first received IP address as the configured IP address. The image forming device joins the local area network through one of the plurality of routers (such as router A), and another router in the local area network (such as router B) can also assign an IP address to the image forming device. If the image forming device is assigned an IP address by the router B that has enabled the DHCP service and another device (such as a mobile phone) connected to the router A that also has enabled the DHCP service is assigned an IP address by the router A, even if the another device and the image forming device are connected to the same router A, they cannot communicate because the assigned IP addresses belong to different network segments. It should be noted that the dynamic configuration service involved in the present disclosure may be, for example, a DHCP service, other services similar to the DHCP service, or any service that plays a dynamic configuration role. The present disclosure does not specifically limit the dynamic configuration service.

The present disclosure provides a method, device, and apparatus for network connection, and a storge medium, to at least partially alleviate the above problems. In the present disclosure, a terminal may select any one of at least two routers included in a local area network as a target router, obtain network segment filtering information through a connection with the target router, and send the network segment filtering information to an image forming device. The image forming device may establish a connection with the target router according to the obtained network configuration information, and based on the network segment filtering information, obtain an IP address in the same network segment as the terminal from the IP addresses allocated to the image forming device by the dynamic configuration service corresponding to each router of the local area network as the target IP address, to communicate with the terminal through the target IP address. The situation that the image forming device and the terminal cannot communicate normally may be avoided, to ensure the normal communication between the image forming device and the terminal without the user having to set up an additional router, thereby effectively improving the user's experience of using the image forming device.

Hereinafter, first, an exemplary description will be given of the application scenario of the solution provided by the present application.

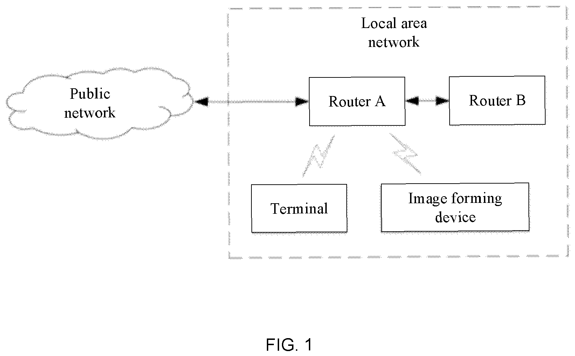

FIG1 is a schematic diagram of an application scenario provided by one embodiment of the present disclosure. As shown in FIG. 1, in this application scenario, the local area network may include two cascaded routers, namely router A and router B. A terminal and an image forming device may be in the local area network. The image forming device may be connected in series with the router A and the router B, and both router A and router B may enable the dynamic configuration services (such as DHCP services). The router A may be connected to the public network. The terminal may be connected to the router A, and the terminal may send network segment filtering information to the image forming device. The image forming device may establish a connection with the router A based on the obtained network configuration information, send an address request instruction to the router A and the router B, obtain an IP address in the same network segment as the terminal based on the network segment filtering information as the target IP address, and then communicate with the terminal through the target IP address.

It should be noted that FIG. 1 is only a schematic diagram of an application scenario provided by one embodiment of the present disclosure, and is used as an example only to illustrate the present disclosure. The present disclosure does not limit devices included in FIG.1, nor does it limit the positional relationship between the devices in FIG. 1.

Next, the technical solutions of the present application will be described in detail through specific embodiments. It should be noted that the following several specific embodiments can be combined with each other. For the same or similar concepts or processes, they may not be repeated in some embodiments.

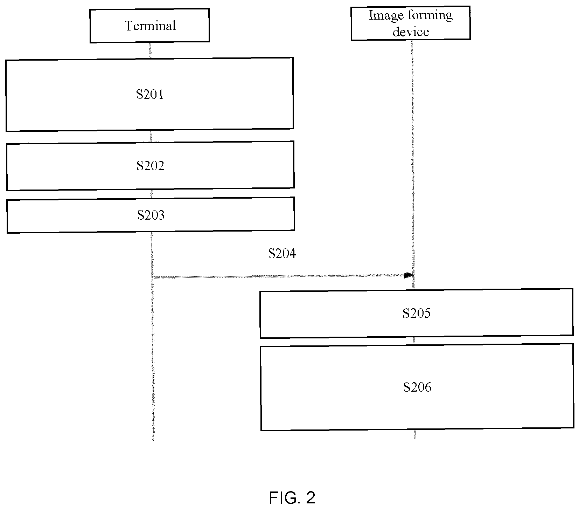

One embodiment of the present disclosure provides a network connection method. FIG. 2 shows a schematic diagram of signaling interaction of the network connection method according to the present embodiment. The terminal and the image forming device may be in the local area network, and the local area network may include at least two routers. The at least two routers may enable the dynamic configuration service. The method may include S201 to S206.

In S201, a connection with the target router may be established in response to the terminal selecting any one of the at least two routers included in the local area network as the target router.

Exemplarily, the terminal may be, for example, a mobile phone, and the image forming device may be, for example, a printer. A user may open an application (APP) corresponding to the printer on the mobile phone, search for the printer, and then select the printer to be used. The user may enter the name and password of the target router to which the desired printer is connected, click on the virtual control for connecting to the target router, and establish a connection with the target router. Correspondingly, the terminal may respond to the configuration operation of the information of the target router and obtain the network configuration information. The network configuration information may include at least one information item of the name and password of the target router. The configuration operation may be an operation corresponding to the name and password of the target router to which the printer desires to connect. Therefore, the mobile phone may obtain the network configuration information and save the network configuration information to send the network configuration information to the image forming device.

In S202, the terminal may obtain network segment filtering information by connecting to the target router.

In one embodiment, after the terminal establishes a connection with the target router, the terminal may obtain the network segment filtering information by connecting to the target router and save the network segment filtering information.

In one embodiment, optionally, the network segment filtering information may include at least one of an IP address of the dynamic configuration server built into the target router, an IP address of the target router, or an IP address of the terminal. The IP address of the terminal may be allocated to the terminal by the target router through the built-in dynamic configuration server.

After the terminal establishes the connection with the target router, the target router may allocate the IP address to the terminal through the built-in dynamic configuration server (such as DHCP service). At the same time, the terminal may obtain the IP address of the dynamic configuration server built into the target router and the IP address of the target router by connecting to the target router, thereby obtaining the network segment filtering information. The network segment filtering information may include at least one of the IP address of the dynamic configuration server built into the target router, the IP address of the target router, or the IP address of the terminal.

In S203, the terminal may establish a connection with the image forming device.

The connection manner between the terminal and the image forming device is not limited specifically by the present disclosure. For example, the terminal may choose to establish the connection with the image forming device through a hotspot, Bluetooth, infrared, near field communication technology (NFC) or other methods of the image forming device.

In one embodiment, optionally, before the terminal establishes the connection with the image forming device, the network connection method may further include: disconnecting the connection with the target router.

Exemplarily, based on S201, after the mobile phone obtains the network segment filtering information through the connection with the target router, the mobile phone may be controlled to disconnect the connection with the target router through the APP corresponding to the printer on the mobile phone, and establish the connection with the hotspot or Bluetooth function of the printer.

In another embodiment, the network connection method may also include: while maintaining the connection with the target router, the terminal may establish the connection with the image forming device.

Exemplarily, after the mobile phone obtains the network segment filtering information through the connection with the target router, the mobile phone may establish the connection with the hotspot or Bluetooth function of the printer while maintaining the connection with the target router.

In S204, the terminal may send the network segment filtering information to the image forming device through the connection established with the image forming device.

Correspondingly, the image forming device may receive the network segment filtering information sent by the terminal through the connection established with the terminal.

Exemplarily, in one embodiment, based on S203, after the mobile phone establishes the connection with the hotspot of the printer, the mobile phone may send the network segment filtering information to the printer through the connection with the hotspot of the printer. Correspondingly, the printer may receive the network segment filtering information sent by the mobile phone.

The present disclosure does not specifically limit the method for sending the network segment filtering information and the network configuration information. The network segment filtering information and the network configuration information may be sent to the image forming device separately, or the network segment filtering information and the network configuration information may be sent to the image forming device at the same time.

In one embodiment, for example, the terminal may send the network configuration information to the image forming device at the same time when sending the network segment filtering information, to improve the efficiency of information transmission.

In S205, the image forming device may establish a connection with the target router according to the obtained network configuration information.

After the image forming device obtains the network configuration information, the image forming device may establish the connection with the target router according to the network configuration information, that is, the name and password of the target router.

In S206, the image forming device may send an address request instruction to the at least two routers included in the local area network, and based on the network segment filtering information, and obtain an IP address in the same network segment as the terminal as the target IP address, to communicate with the terminal through the target IP address.

Exemplarily, in one embodiment, it is assumed that the local area network includes two routers (namely router A and router B), and both the router A and the router B have the DHCP service enabled. Assuming that router A is the target router, after the image forming device establishes the connection with the router A according to the network configuration information, the image forming device may send the address request instruction to the router A and the router B. For example, the address request instruction may be a DHCP discovery message. The DHCP services corresponding to each of the router A and the router B may assign an IP address to the image forming device. The DHCP service corresponding to the router A may allocate an IP address of 10.20.19.2 to the image forming device, and the DHCP service corresponding to the router B may allocate an IP address of 192.169.31.3 to the image forming device. The IP address of the terminal may be 10.20.19.4, for example. Therefore, the image forming device may filter the two IP addresses of 10.20.19.2 and 192.169.31.3 based on the network segment filtering information. The image forming device may obtain the IP address in the same network segment as the terminal as the target IP address (that is, the target IP address may be 10.20.19.2), and discard the IP address that is not in the same network segment as the terminal (that is, 192.169.31.3). The image forming device may communicate with the terminal through the target IP address. Since the target IP address and the terminal are in the same network segment, the situation where the image forming device and the terminal cannot communicate normally may be avoided.

For details about how the image forming device sends the address request instruction to the at least two routers included in the local area network, and obtains the IP address in the network segment same as the terminal as the target IP address through the network segment filtering information, references may be made to the following embodiments.

In the network connection method provided by the embodiments of the present disclosure, the terminal and the image forming device may be in the local area network. The local area network may include the at least two routers, and the at least two routers may have dynamic configuration services enabled. The terminal may select any one of the at least two routers included in the local area network as the target router through the terminal response, establish the connection with the target router, and obtain the network segment filtering information through the connection with the target router. The terminal then may establish the connection with the image forming device, and send the network segment filtering information to the image forming device through the connection established with the image forming device. The image forming device may establish the connection with the target router according to the obtained network configuration information. The image forming device may send the address request instruction to the at least two routers included in the local area network, and obtains the IP address in the same network segment as the terminal as the target IP address based on the network segment filtering information, to communicate with the terminal through the target IP address. In the present disclosure, in the network environment where the at least two routers included in the local area network have the dynamic configuration services enabled, the image forming device may obtain the IP address in the same network segment as the terminal as the target IP address from the IP addresses allocated to the image forming device by the dynamic configuration services corresponding to each router in the local area network, and communicate with the terminal through the target IP address. Since the target IP address of the image forming device and the IP address of the terminal are in the same network segment, the situation where the image forming device and the terminal cannot communicate normally may be avoided, and the normal communication between the image forming device and the terminal is guaranteed without the need for the user to set up other routers, thereby effectively improving the user experience of the image forming device.

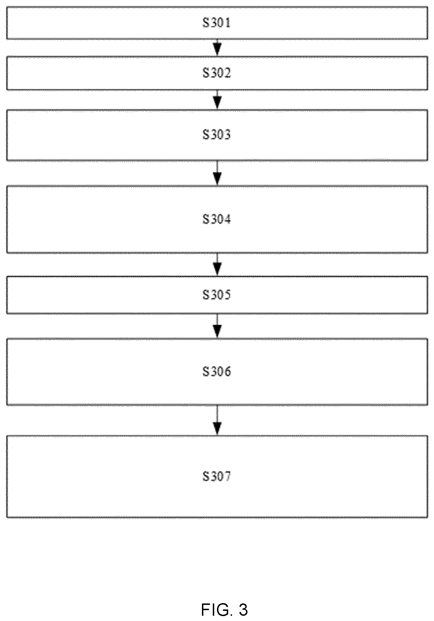

Acquisition of the network configuration information will be described below using one embodiment shown in FIG.3 as an example. FIG. 3 shows a flow chart of a network connection method provided by one embodiment of the present disclosure and applied to the image forming device, to connect the image forming device to the local area network. The local area network may include the at least two routers, and the at least two routers may have the dynamic configuration services enabled. As shown in FIG. 3, the method may include S301 to S3041.

In S301, the network configuration information may be obtained. The network configuration information may include at least one of the name and password of the target router.

In various embodiments, the network configuration information may be obtained through various manners, such as through manually input by a user through a control panel of the image forming device, or by transmission to the image forming device after the terminal establishes the connection with the image forming device, or by acquisition from an information module pre-stored in the image forming device. The present disclosure has no limit on this.

S302, the connection with the terminal may be established.

For the specific description of S302, references may be made to the relevant description of S203 in the embodiment shown in FIG. 2, which will not be repeated here.

In S303, the network segment filtering information sent by the terminal may be received. The network segment filtering information may be obtained by the terminal after the terminal establishes the connection with the target router in response to that the terminal selects any one of the at least two routers included in the local area network as the target router.

For the specific description of S303, references may be made to the relevant description of S201, S202 and S204 in the embodiment shown in FIG. 2, which will not be repeated here.

In S304, the connection with the target router may be established according to the network distribution information.For the specific description of S304, references may be made to the relevant description of S205 in the embodiment shown in FIG. 2, which will not be repeated here.

In S3041, the image forming device may send the address request instruction to the at least two routers included in the local area network, and obtain one IP address in the same network segment as the terminal as the target IP address based on the network segment filtering information, to communicate with the terminal through the target IP address.

For the specific description of S3041, references may be made to the relevant description of S206 in the embodiment shown in FIG. 2, which will not be repeated here.

The present disclosure does not limit the execution order of S301 and S303.

In one embodiment, S3041 may further include S305 to S307.

In S305, a dynamic configuration discovery message may be broadcasted.

In one embodiment, the dynamic configuration discovery message may be, for example, a DHCP discover message. After establishing the connection with the target router, the image forming device may broadcast the DHCP discover message to each router in the local area network. Accordingly, the built-in DHCP server of each router in the local area network may receive the DHCP discover message.

In S306, a dynamic configuration offer message sent by the built-in dynamic configuration server of each router in the local area network may be received. The dynamic configuration offer message corresponding to one router may include at least one of: the IP address of the router, the IP address of the built-in dynamic configuration server of the router, or the IP address allocated to the image forming device.

In one embodiment, the built-in DHCP server of each router in the local area network may respectively send a DHCP Offer message. Accordingly, the image forming device may receive the DHCP Offer message sent by the built-in DHCP server of each router in the local area network, and the DHCP offer message may include at least one of the IP address of the corresponding router, the IP address of the built-in DHCP server of the corresponding router, and the IP address allocated to the image forming device.

In S307, based on the network segment filtering information, the target IP address allocated to the image forming device may be obtained by filtering from dynamic configuration offer messages, to communicate with the terminal through the target IP address.

In one embodiment, for example, after receiving the DHCP offer message sent by the dynamic configuration server built into each router in the local area network, the image forming device may obtain the target IP address allocated to the image forming device through filtering from the DHCP offer messages based on the network segment filtering information, such that the image forming device is able to communicate with the terminal through the target IP address.

In one embodiment, the image forming device may obtain the target IP address allocated to the image forming device through filtering from the DHCP offer messages based on the network segment filtering information, by: when the IP address of the built-in dynamic configuration server of one router included in the dynamic configuration offer message of the router is the same as the IP address of the dynamic configuration server built into the target router, the IP address allocated to the image forming device contained in the dynamic configuration offer message of the router may be determined as the target IP address; or, when the IP address of one router contained in the dynamic configuration offer message corresponding to the router is the same as the IP address of the target router, the IP address allocated to the image forming device contained in the dynamic configuration offer message corresponding to the router may be determined as the target IP address; or, when the IP address allocated to the image forming device contained in the dynamic configuration offer message corresponding to one router and the IP address of the terminal are in the same network segment, the IP address allocated to the image forming device contained in the dynamic configuration offer message corresponding to the router may be determined as the target IP address.

In one example, the dynamic configuration offer message corresponding to one router may include the IP address of the dynamic configuration server built into the router. The dynamic configuration server may be, for example, a DHCP server, and the dynamic configuration offer message may be, for example, a DHCP message. In the example of S206, it is assumed that the IP address of the DHCP server built into the target router connected by the terminal is 10.20.19.5, and the two routers included in the local area network are the router A and the router B. The IP address of the built-in DHCP server of the router A is, for example, 10.20.19.5, and the IP address allocated to the image forming device contained in the DHCP offer message sent by the router A is, for example, 10.20.19.2. The IP address of the built-in DHCP server of the router B is, for example, 192.169.31.6, and the IP address allocated to the image forming device contained in the DHCP offer message sent by the router B is, for example, 192.169.31.3. Therefore, the IP address 10.20.19.5 of the built-in DHCP server of the target router may be compared with the IP address 10.20.19.5 of the built-in DHCP server of the router A and the IP address 192.169.31.6 of the built-in DHCP server of the router B respectively, and it may be determined that the IP address of the built-in DHCP server of the target router is the same as the IP address of the built-in DHCP server of the router A. Therefore, the IP address 10.20.19.2 allocated to the image forming device contained in the DHCP offer message sent by the router A may be determined as the target IP address, and the router A may be determined as the target router.

In another example, the dynamic configuration provision message corresponding to one router may include the IP address of the router. Based on the example of S206, it is assumed that the IP address of the target router to which the terminal is connected is 10.20.19.7, and the two routers included in the local area network are the router A and the router B. The IP address of the router A is, for example, 10.20.19.7, and the IP address allocated to the image forming device contained in the DHCP offer message sent by the router A is, for example, 10.20.19.2. The IP address of the router B is, for example, 192.169.31.8, and the IP address allocated to the image forming device contained in the DHCP offer message sent by the router B is, for example, 192.169.31.3. The IP address of the target router 10.20.19.7 may be compared with the IP address of the router A 10.20.19.7 and the IP address of the router B 192.169.31.8 respectively, such that it can be determined that the IP address of the target router is the same as the IP address of router A, and then the IP address 10.20.19.2 allocated to the image forming device contained in the DHCP offer message sent by router A can be determined as the target IP address, and router A is the target router.

In another example, the dynamic configuration offer message may include the IP address of the terminal. Based on the example of S206, it is assumed that the IP address of the terminal is 10.20.19.8, and the two routers included in the local area network are the router A and the router B. The IP address allocated to the image forming device contained in the DHCP offer message sent by the router A is, for example, 10.20.19.2, and the IP address allocated to the image forming device contained in the DHCP offer message sent by the router B is, for example, 192.169.31.3. The IP address 10.20.19.8 of the terminal may be compared with the IP address 10.20.19.2 allocated to the image forming device contained in the DHCP offer message sent by the router A and the IP address 192.169.31.3 allocated to the image forming device contained in the DHCP offer message sent by the router B. Since 10.20.19.8 and 10.20.19.2 are in the same network segment, it may be determined that the IP address of the terminal is the same as the IP address allocated to the image forming device contained in the DHCP offer message sent by the router A, and then the IP address 10.20.19.2 allocated to the image forming device contained in the DHCP offer message sent by the router A may be determined as the target IP address.

The network connection method provided in the present embodiment may be applied to the image forming device, to connect the image forming device to the local area network. The local area network may include at least two routers, and the at least two routers may have the dynamic configuration services enabled. The connection may be established between the image forming device and a terminal, and the network segment filtering information sent by the terminal may be received, where the network segment filtering information is obtained after the terminal establishes the connection with the target router in response to the terminal selecting any one of the at least two routers included in the local area network as the target router. According to the obtained network configuration information, the connection may be established with the target router and the dynamic configuration discovery message may be broadcasted. The dynamic configuration offer message may be received from the dynamic configuration server built into each router in the local area network. One dynamic configuration offer message may include at least one of the IP address of one corresponding router, the IP address of the dynamic configuration server built into one corresponding router, or the IP address allocated to the image forming device. Based on the network segment filtering information, the target IP address allocated to the image forming device may be filtered from the dynamic configuration provision message to communicate with the terminal through the target IP address. In the present disclosure, in the network environment where the at least two routers included in the local area network have the dynamic configuration services enabled, the image forming device may obtain one IP address in the same network segment as the terminal as the target IP address from the IP addresses allocated to the image forming device by the dynamic configuration services corresponding to each router in the local area network, based on the received network segment filtering information sent by the terminal and the dynamic configuration offer message sent by the dynamic configuration server built into each router in the local area network, to communicate with the terminal through the target IP address. Since the target IP address of the image forming device and the IP address of the terminal are in the same network segment, the situation where the image forming device and the terminal cannot communicate normally may be avoided, and the normal communication between the image forming device and the terminal is guaranteed without the need for the user to set up other routers, thereby effectively improving the user experience of the image forming device.

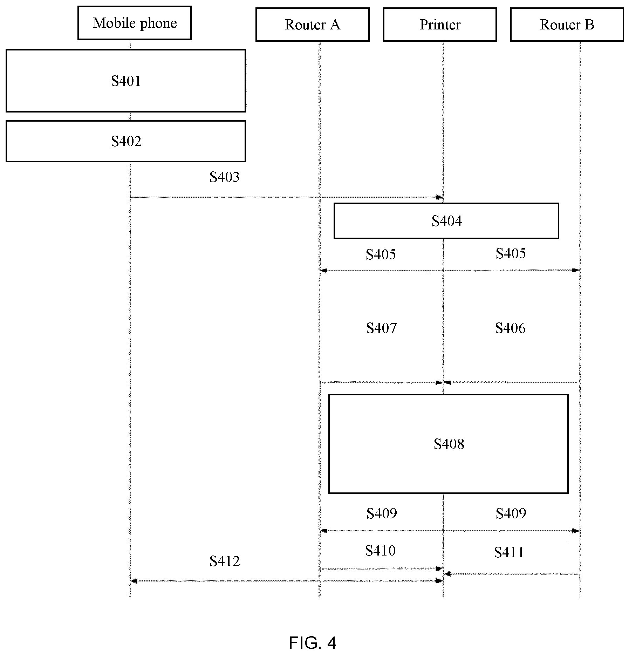

As a preferred embodiment, FIG. 4 is a schematic diagram of signaling interaction of a network connection method provided by another embodiment of the present disclosure, and is illustrated by taking the case where the terminal is a mobile phone, the image forming device is a printer, and the dynamic configuration service is a DHCP service as an example. The mobile phone and the printer may be in a local area network, and the local area network may include two routers (i.e., the router A and the router B), and both the router A and the router B may have the DHCP services enabled. As shown in FIG. 4, in the present embodiment, the network connection method may include S401 to S412.

In S401, in response to the mobile phone selecting the router A as the target router, the mobile phone may establish a connection with the router A, and obtain and save network segment filtering information through the connection with the router A.

In one embodiment, the mobile phone may establish the connection with the router A through a wireless network (Wireless Fidelity, Wi-Fi).

In S402, the mobile phone may disconnect from router A and establish a connection with a hotspot of the printer.

In S403, the mobile phone may send the network segment filtering information and the network configuration information to the printer through the connection with the hotspot of the printer.

The network configuration information may include at least one information item of the name or the password of the target router. Correspondingly, the printer may receive and save the network segment filtering information and the network configuration information sent by the terminal through the connection established between the hotspot of the printer and the terminal.

In S404, the printer may establish a connection with the router A based on the network configuration information.

In S405, the printer may broadcast a DHCP discovery message.

Accordingly, both the router A and the router B may receive the DHCP discovery message.

In S406, a built-in DHCP server of the router B may send a unicast DHCP offer message to the printer, and the DHCP offer message may include at least one of the IP address of the router B, the IP address of the built-in dynamic configuration server of the router B, or the IP address allocated to the printer.

Accordingly, the printer may receive the DHCP offer message sent by the built-in DHCP server of the router B.

In S407, a built-in DHCP server of the router A may send a unicast DHCP offer message to the printer, and the DHCP offer message may include at least one of the IP address of the router A, the IP address of the built-in dynamic configuration server of the router A, or the IP address allocated to the printer.

Accordingly, the printer may receive the DHCP offer message sent by the built-in DHCP server of the router A.

It should be noted that the embodiment of the present disclosure does not limit the execution order of S406 and S407.

In S408, the printer may filter the DHCP offer messages according to the network segment filtering information sent by the mobile phone, the DHCP offer message sent by the built-in DHCP server of the router A, and the DHCP offer message sent by the built-in DHCP server of the router B, to obtain the target IP address assigned to the printer in the same network segment as the mobile phone, that is, the IP address assigned to the printer by the router A.

In S409, the printer may broadcast a DHCP request message. Accordingly, both the router A and the router B may receive the DHCP request message.

In S410, the router A may send a unicast DHCP confirmation message to the printer. Accordingly, the printer may receive the DHCP confirmation message sent by the router A.

In S411, the router B may send a unicast DHCP rejection message to the printer. Accordingly, the printer may receive the DHCP rejection message sent by the router B.

It should be noted that the embodiment of the present disclosure does not limit the execution order of S410 and S411.

In S412, the printer may communicate with the mobile phone through the target IP address.

On the basis of the above embodiments, the network connection method provided by the embodiments of the present disclosure may be extended to the following scenarios.
(1) Home scenario: When applying for a broadband network, an operator may give the user a device with built-in routing and DHCP service functions. However, when the device is used as a router, the performance may not meet the user's network usage needs. In this case, the user may often connect a router with the device in series for use, which results in multiple DHCP service scenarios, and the network coverage of the router may not be good. The user may often choose to connect the router in series or wireless mesh network to increase network coverage and improve signal strength.
(2) Enterprise scenario: the network layering methods or subnet division methods used because of the management needs of enterprises may be also prone to more complex network connections, and there may be many scenarios where multiple DHCP services appear because of the serial connection of routers.
(3) Other scenarios: the user may need to have full control over network ports, but the device with built-in routing and DHCP service functions provided by the operator may not allow users to control all ports or make advanced network settings. In this case, it may be necessary to connect an additional router in series to meet more network customization requirements. Or a virtual private network (VPN) may be used to build a dedicated network channel between two locations to ensure connection security. Or, if network diversion is required, an additional router may be connected in series. In these scenarios, multiple DHCP services may appear.

The following are the device embodiments of the present application, which can be used to execute the method embodiments of the present application. For details not disclosed in the device embodiments of the present application, please refer to the method embodiments of the present application.

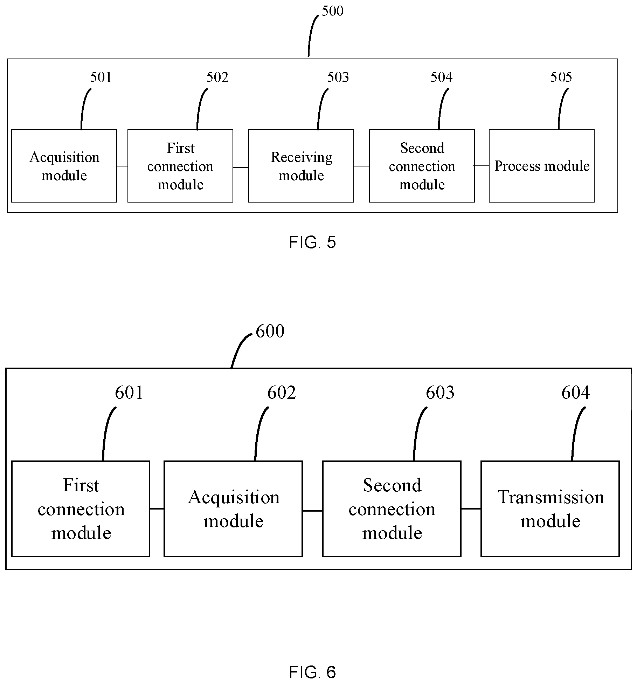

The present disclosure also provides a network connection device. As shown in FIG. 5, which is a schematic structure of an exemplary network connection device provided by the present disclosure, in one embodiment, the network connection device may be applied to an image forming device, to connect the image forming device to a local area network. The local area network may include at least two routers, and at least two routers may enable dynamic configuration services. As shown in FIG. 5, in one embodiment, the network connection device 500 may include: an acquisition module 501, a first connection module 502, a receiving module 503, a second connection module 504, and a processing module 505.

The acquisition module 501 may be configured to obtain network configuration information, and the network configuration information may include at least one information item of a name and a password of a target router.

The first connection module 502 may be configured to establish a connection with the terminal.

The receiving module 503 may be configured to receive the network segment filtering information sent by the terminal, and the network segment filtering information may be obtained after the terminal establishes a connection with the target router in response to the terminal selecting any router of the at least two routers included in the local area network as the target router.

The second connection module 504 may be configured to establish a connection with the target router according to the network configuration information.

The processing module 505 may be configured to send an address request instruction to the at least two routers included in the local area network, and obtain an IP address in the same network segment as the terminal as the target IP address based on the network segment filtering information, to communicate with the terminal through the target IP address.

In some embodiments, the network segment filtering information may include at least one of the IP address of the dynamic configuration server built into the target router, the IP address of the target router, and the IP address of the terminal. The IP address of the terminal may be allocated to the terminal by the target router through the built-in dynamic configuration server.

In some embodiments, the address request instruction may include a dynamic configuration discovery message. The processing module 505 may be further configured to: broadcast the dynamic configuration discovery message; receive the dynamic configuration offer message sent by the dynamic configuration server built into each router in the local area network; and, based on the network segment filtering information, filter the dynamic configuration offer messages to obtain the target IP address allocated to the image forming device. The dynamic configuration offer message sent by one router in the local area network may include at least one of the IP address of the router, the IP address of the dynamic configuration server built into the router, or the IP address allocated to the image forming device.

In one embodiment, when the processing module 505 is used to filter and obtain the target IP address assigned to the image forming device from the dynamic configuration offer messages based on the network segment filtering information, it may be specifically configured to: when the IP address of the dynamic configuration server built into one router contained in the dynamic configuration offer message of the router is the same as the IP address of the dynamic configuration server built into the target router, determine the IP address assigned to the image forming device contained in the dynamic configuration offer message of the router as the target IP address; or, when the IP address of one router contained in the dynamic configuration offer message corresponding to the router is the same as the IP address of the target router, determine the IP address assigned to the image forming device contained in the dynamic configuration offer message corresponding to the router as the target IP address; or, when the IP address assigned to the image forming device contained in the dynamic configuration offer message corresponding to one router and the IP address of the terminal are in the same network segment, determine the IP address assigned to the image forming device contained in the dynamic configuration offer message corresponding to the router as the target IP address.

The device provided by various embodiments of the present disclosure may be used to implement any network connection methods of the image forming device provided by various embodiments of the present disclosure, and may have similar implementation and benefits.

The present disclosure also provides another network connection device applied to a terminal. The terminal and the image forming device may be located in the local area network. The local area network may include at least two routers, and at least two routers may enable dynamic configuration services. As shown in FIG. 6, which is a schematic diagram of another exemplary network connection device provided by the present disclosure, in one embodiment, the network connection device 600 may include: a first connection module 601, an acquisition module 602, a second connection module 603 and a sending module 604.

The first connection module 601 may be configured to establish a connection with a target router in response to the terminal selecting any one of at least two routers included in the local area network as the target router.

The acquisition module 602 may be configured to obtain network segment filtering information through the connection with the target router.

The second connection module 603 may be configured to establish a connection with the image forming device.

The sending module 604 may be configured to send the network segment filtering information to the image forming device through the connection established with the image forming device. The image forming device may be configured to establish a connection with the target router according to the acquired network configuration information, send an address request instruction to the at least two routers included in the local area network, and obtain an IP address in the same network segment as the terminal as the target IP address based on the network segment filtering information, to communicate with the terminal through the target IP address. The network configuration information may include at least one information item of the name and password of the target router.

Optionally, before establishing the connection with the image forming device, the second connection module 603 may be also configured to: disconnect the connection with the target router.

Optionally, the network segment filtering information may include at least one of the IP address of the dynamic configuration server built into the target router, the IP address of the target router, or the IP address of the terminal. The IP address of the terminal may be allocated to the terminal by the target router through the built-in dynamic configuration server.

Optionally, before selecting any one of the at least two routers included in the local area network as the target router in response to the terminal, the acquisition module 602 may also be used to: respond to the configuration operation of the information of the target router and obtain the network configuration information.

The device provided by various embodiments of the present disclosure may be used to implement any network connection methods of the terminal provided by various embodiments of the present disclosure, and may have similar implementation and benefits.

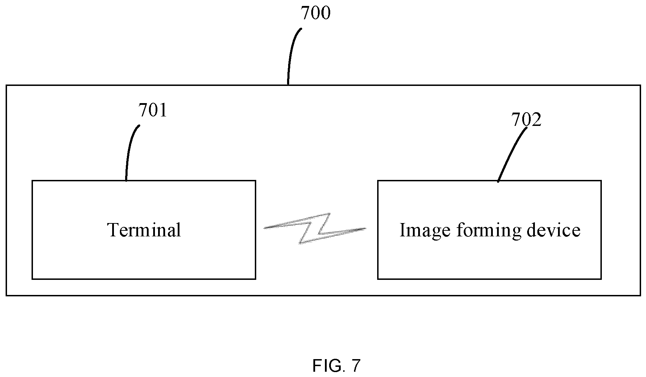

The present disclosure also provides a network connection system. As shown in FIG. 7, which is a schematic diagram of an exemplary network connection system, in one embodiment, The network connection system 700 may include: a terminal 701 and an image forming device 702. The terminal 701 and the image forming device 702 may be in a local area network. The local area network may include at least two routers, and the at least two routers may enable dynamic configuration services.

The terminal 701 may be configured to: select any router among the at least two routers included in the local area network as the target router, establish a connection with the target router; obtain network segment filtering information through the connection with the target router, establish a connection with the image forming device 702, and send the network segment filtering information to the image forming device 702 through the connection established with the image forming device 702.

The image forming device 702 may be configured to: obtain network configuration information where the network configuration information may include at least one information item of the name and password of the target router; establish a connection with the terminal 701; receive the network segment filtering information and network configuration information sent by the terminal 701; establish a connection with the target router according to the network configuration information; send an address request instruction to the at least two routers included in the local area network, and obtain an IP address in the same network segment as the terminal 701 as the target IP address based on the network segment filtering information, to communicate with the terminal 701 through the target IP address.

The network connection system provided by the present disclosure may be used to implement any network connection methods of the image forming device or the terminal provided by various embodiments of the present disclosure, and may have similar implementation and benefits.

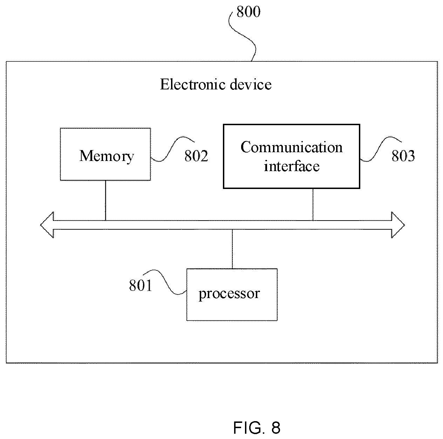

The present disclosure also provides an electronic device. As shown in FIG. 8, which is a structure of an exemplary electronic device provided by one embodiment of the present disclosure, in one embodiment, the electronic device 800 may include at least one processor 801, and a memory 802.

The memory 802 may be used to store a program. The program may include program codes and the program codes may include computer executable instructions.

The memory 802 may include a high-speed random access memory (RAM), and may also include a non-volatile memory, such as at least one disk storage.

The at least one processor 801 may be used to execute the computer execution instructions stored in the memory 802 to implement the network connection method provided by various embodiments of the present disclosure. The at least one processor 801 may include a central processing unit (CPU), an application specific integrated circuit (ASIC), one or more integrated circuits configured to implement the embodiments of the present disclosure. When implementing the network connection method provided by various embodiments of the present disclosure, the electronic device may be, for example, an electronic device with processing functions such as a terminal and an image forming device.

Optionally, the electronic device 800 may also include a communication interface 803. In one embodiment, when the communication interface 803, the memory 802 and the at least one processor 801 are implemented independently, the communication interface 803, the memory 802 and the at least one processor 801 may be interconnected and may achieve mutual communication through a bus. The bus may be an Industry Standard Architecture (ISA) bus, a Peripheral Component (PCI) bus, or an Extended Industry Standard Architecture (EISA) bus, etc. The bus may include an address bus, a data bus, a control bus, etc., but it does not mean that there is only one bus or one type of bus.

Optionally, in another embodiment, when the communication interface 803, the memory 802, and the at least one processor 801 are integrated on a chip, the communication interface 803, the memory 802, and the at least one processor 801 may achieve communication through an internal interface.

The present disclosure also provides a computer-readable storage medium. The storage medium may be configured to store computer program instructions, and when a processor executes the computer program instructions, the network connection method provided by various embodiments of the present disclosure may be implemented.

The present disclosure also provides a computer program product, including a computer program, which may implement the network connection method provided by various embodiments of the present disclosure when the computer program is executed by a processor.

The computer-readable storage medium may be implemented by any type of volatile or non-volatile storage device or a combination thereof, such as static random access memory (SRAM), electrically erasable programmable read only memory (EEPROM), erasable programmable read only memory (EPROM), programmable read only memory (PROM), read only memory (ROM), magnetic memory, flash memory, magnetic disk or optical disk. The readable storage medium may be any available medium that can be accessed by a general or special-purpose computer.

An exemplary readable storage medium is coupled to a processor such that the processor is able to read information from the readable storage medium and write information to the readable storage medium. Of course, the readable storage medium may also be a component of the processor. The processor and the readable storage medium may be located in a dedicated integrated circuit. Of course, in another embodiment, the processor and the readable storage medium may also exist in the network connection device as discrete components.

Those of ordinary skill in the art can understand that all or part of the steps of implementing the above method embodiments can be completed by hardware related to program instructions. The aforementioned program can be stored in a computer-readable storage medium. When the program is executed, it executes the steps including the above method embodiments; and the aforementioned storage medium includes various media that can store program codes, such as ROM, RAM, magnetic disks, or optical disks..

It should be noted that the above embodiments are only used to illustrate the technical solution of the present disclosure, but not to limit it. Although the present disclosure has been described in detail with reference to the above embodiments, those persons of ordinary skill in the art should understand that the technical solutions described in the above embodiments can still be modified, or some or all the technical features can be equivalently replaced. The modifications or substitutions do not deviate from the essence of the corresponding technical solutions from the scope of the technical solutions of embodiments of the present disclosure.

## Claims

1. A network connection method, applied to an image forming device for connecting the image forming device to a local area network including at least two routers that enable dynamic configuration services, the method comprising:
obtaining network configuration information, wherein the network configuration information includes at least one information item including a name or a password of a target router;
establishing a connection with a terminal;
receiving network segment filtering information sent by the terminal, wherein the network segment filtering information is obtained after the terminal establishes a connection with a target router in response to the terminal selecting any one of the at least two routers included in the local area network as the target router;
establishing a connection with the target router according to the network configuration information; and
sending an address request instruction to the at least two routers included in the local area network, and obtaining an Internet Protocol (IP) address in a network segment same as the terminal as a target IP address based on the network segment filtering information, to communicate with the terminal through the target IP address.

2. The method according to claim 1, wherein:
the network segment filtering information includes at least one of an IP address of a dynamic configuration server built into the target router, an IP address of the target router, or an IP address of the terminal, wherein the IP address of the terminal is allocated to the terminal by the target router through the built-in dynamic configuration server.

3. The method according to claim 1 or claim 2, wherein:
the address request instruction includes a dynamic configuration discovery message; and
sending the address request instruction to the at least two routers included in the local area network and obtaining the IP address in the network segment same as the terminal as the target IP address based on the network segment filtering information includes:
broadcasting the dynamic configuration discovery message;
receiving a dynamic configuration offer message sent by one dynamic configuration server built into each router in the local area network, wherein the dynamic configuration offer message includes at least one of an IP address of the router, an IP address of the dynamic configuration server built into the router, or an IP address allocated to the image forming device; and
obtaining the target IP address allocated to the image forming device from the dynamic configuration offer messages through filtering based on the network segment filtering information.

4. The method according to claim 3, wherein obtaining the target IP address allocated to the image forming device from the dynamic configuration offer messages through filtering based on the network segment filtering information includes:
when the IP address of the dynamic configuration server built into one router contained in the dynamic configuration offer message corresponding to the router is the same as the IP address of the dynamic configuration server built into the target router, determining the IP address allocated to the image forming device contained in the dynamic configuration offer message corresponding to the router as the target IP address; or
when the IP address of one router contained in the dynamic configuration offer message corresponding to the router is the same as the IP address of the target router, determining the IP address allocated to the image forming device contained in the dynamic configuration offer message corresponding to the router as the target IP address; or
when the IP address allocated to the image forming device contained in the dynamic configuration offer message corresponding to one router and the IP address of the terminal are in the same network segment, determining the IP address allocated to the image forming device contained in the dynamic configuration offer message corresponding to the router is determined as the target IP address.

5. A network connection method, applied to a terminal which is in a local area network same as an image forming device, the local area network including at least two routers with enabled dynamic configuration services, the method comprising:
selecting any one of the at least two routers included in the local area network as a target router in response to the terminal, and establishing a connection with the target router;
obtaining network segment filtering information through the connection with the target router;
establishing a connection with the image forming device; and
sending the network segment filtering information to the image forming device through the connection established with the image forming device,
wherein:
the image forming device is used to establish a connection with the target router according to the obtained network configuration information, and send an address request instruction to the at least two routers included in the local area network, and obtain an IP address in a network segment same as the terminal as a target IP address based on the network segment filtering information, to communicate with the terminal through the target IP address; and
the network configuration information includes at least one information item including a name or a password of the target router.

6. The method according to claim 5, before establishing the connection with the image forming device, further including
disconnecting the connection with the target router.

7. The method according to claim 5 or claim 6, wherein:
the network segment filtering information includes at least one of an IP address of a dynamic configuration server built into the target router, an IP address of the target router, or an IP address of the terminal, wherein the IP address of the terminal is allocated to the terminal by the target router through the built-in dynamic configuration server.

8. The method according to claim 7, before selecting any one of the at least two routers included in the local area network as the target router in response to the terminal, further including:
obtaining network configuration information in response to a configuration operation to the target router.

9. An electronic device, comprising a processor and a memory connected to the processor in communication, wherein:
the memory is configured to store computer-executable instructions;
the processor is configured to execute the computer-executable instructions stored in the memory, to cause a device where the processor is located to perform the network connection method according to any one of claim 1 to 4.

10. A computer-readable storage medium, wherein the computer-readable storage medium
stores computer-executable instructions, and when being executed by a processor, the computer-executable instructions are configured to implement the control method according to any one of claims 1 to 4.
